# EUROPEAN PATENT SPECIFICATION

(11) **EP 2 704 369 B1**
(45) Date of publication and mention of the grant of the patent: **16.11.2016**
(21) Application number: 13182558.0
(22) Date of filing: 02.09.2013
(51) Int. Cl.: H04L 12/40, B60R 16/03, G05B 19/05, G06F 13/40, G06F 1/24, G06F 11/07, H04L 12/403, H04L 29/08, H04L 29/14, G06F 9/445

(54) **COMMUNICATION SYSTEM IN MOTOR VEHICLE**
Kommunikationssystem in einem Kraftfahrzeug
Système de communication dans un véhicule à moteur

(30) Priority: 03.09.2012 SE 1250982
(43) Date of publication of application: 05.03.2014
(73) Proprietor: Scania CV AB, 151 87 Södertälje (SE)
(72) Inventor: Paeglis, Peter, 15160 Södertälje (SE); Sundbäck, Pär, 14462 Rönninge (SE)
(74) Representative: Scania CV AB

(56) References cited:
- US-A1- 2011 160 952

## Description

### BACKGROUND TO THE INVENTION AND PRIOR ART

The present invention relates generally to vehicle-integrated communication systems. The invention relates in particular to a communication system according to the preamble of claim 1 and a method according to the preamble of claim 7. The invention relates also to a computer programme according to claim 12 and a computer-readable medium according to claim 13.

Today's motor vehicles are often equipped with a large number of electronic control and monitoring units, so-called nodes, which communicate with one another via one or more networks also known as buses. The nodes may be organised in hierarchical structures whereby for example a superordinate node is in charge of two or more subordinate nodes.

JP-2002-2176430 refers to a solution whereby a control unit controls filtration conditions on the basis of a vehicle's operating state and the environmental requirements to which the vehicle is subject.

JP-2009-253803 describes a filtration method whereby a network gateway node in a vehicle is connected to an external control system. Information and control data are here associated with a validity time which governs whether or not certain information/data are to be conveyed to the control system.

US 8,170,015 describes a network gateway node which includes a storage space for a policy on the basis of which the messages in a network are directed and filtered.

### PROBLEMS OF PRIOR ART

There are thus solutions for handling of information and control signals in communication networks, e.g. in those on board a motor vehicle. In the processing of fault codes it may be advantageous to deal with a group of nodes together. Such an approach may however be difficult to manage in situations where it is necessary to address each node individually, e.g. in software updating.

### SUMMARY OF THE INVENTION

The object of the present invention is therefore to propose a solution which on the one hand achieves the advantages in certain situations of processing two or more nodes in groups, and on the other hand allows individual access to the nodes which form part of such a group.

One aspect of the invention achieves the object by the system described in the introduction in which the superordinate node serves as an interface for said set of subordinate nodes relative to the second bus. In an operating state for normal running of a motor vehicle the superordinate node is configured to provide on the second bus any fault codes arising from said set of subordinate nodes via a shared network address.

In a programming state the network gateway node is configured to allow the diagnosis client to have access, via the first and second buses, the network gateway node and the superordinate node, to the nodes included in said set of subordinate nodes. The diagnosis client may thus review which specific nodes form part of said set of subordinate nodes. The diagnosis client may also effect updating of at least one software in at least one specific node in said set of subordinate nodes. Resetting the superordinate node to the operating state is allowed when updating has been completed.

This system is desirable in making it easy, by switching between operating state and programming state, to achieve both the advantages of collective processing of data from two or more nodes and the advantages which arise from individual access to and programming of specific nodes.

In one embodiment of this aspect of the invention the communication system comprises a connection module connected to the first bus and configured to be connected to a diagnosis client which is external relative to the motor vehicle. Such a connection module is advantageous in providing external access to the vehicle's nodes, e.g. during installation and updating of software.

In another embodiment of this aspect of the invention the shared network address identifies the superordinate node on the second bus. This means that all of the subordinate nodes appear on the second bus as a single node, which simplifies the handling of the subordinate nodes during normal running.

In a further embodiment of this aspect of the invention each of the nodes included in the subordinate nodes is associated, in the operating state, with an address which is unique within said set of subordinate nodes and which is determined by a physical location of the node in the communicative connection to the superordinate node. This gives the superordinate node easy access to each subordinate node.

In yet another embodiment of this aspect of the invention the network gateway node is further configured, in the programming state, to investigate whether two or more of the nodes in said set of subordinate nodes have not yet been programmed with a function-specific software and are consequently associated with the same address on the second bus. In the programming state the network gateway node is also configured, if two or more of the nodes in said set of subordinate nodes prove to be associated with the same address on the second bus, to employ a procedure for random-number-based addressing during said effecting of software updating in said two or more nodes. Relatively effective external access to said subordinate nodes is thus made possible. For example, the procedure for random-number-based addressing may comprise the steps of (a) choosing one of said two or more nodes which are associated with the same address on the second bus, (b) allocating to the chosen node a temporary address which is unique and determined on the basis of a random number, (c) downloading via the superordinate node a software in the chosen node with use of said temporary address, after which the chosen node becomes associated with a permanent address determined by a physical location of the node in the communicative connection to the superordinate node, and (d) choosing one of any remaining nodes out of said two or more nodes which were originally associated with the same address on the second bus. Steps (b) to (d) are repeated until software has been downloaded in all of said two or more nodes which were originally associated with the same address on the second bus.

Another aspect of the invention achieves the object by the method described in the introduction in which the superordinate node serves as an interface for said set of subordinate nodes relative to the second bus. In an operating state for normal running of a motor vehicle the superordinate node is configured to provide on the second bus any fault codes arising from said set of subordinate nodes via a shared network address. The method further comprises putting the network gateway node into a programming state. The diagnosis client is then allocated access to the nodes included in said set of subordinate nodes, via the first and second buses, the network gateway node and the superordinate node. This is followed by reviewing via the diagnosis client of which specific nodes form part of said set of subordinate nodes. Thereupon updating of at least one software in at least one specific node in said set of subordinate nodes is effected via the diagnosis client. The superordinate node is returned to the operating state after completion of updating. The advantages of this method and of its preferred embodiments are indicated by the above discussion of the proposed communication system.

A further aspect of the invention achieves the object by a computer programme which is directly downloadable to the internal memory of a computer, comprising software for directing the steps of the method proposed above when said programme is run on a computer.

Yet another aspect of the invention achieves the object by a computer-readable medium which has stored on it a programme adapted to enabling a computer to direct the steps of the method proposed above.

### BRIEF DESCRIPTION OF THE DRAWINGS

The present invention will now be explained in more detail on the basis of embodiments described by way of examples with reference to the attached drawings.
- Figure 1: is a schematic diagram of a communication system according to an embodiment of the invention, and
- Figure 2: is a flowchart illustrating a preferred embodiment of the method according to the invention.

### DESCRIPTION OF EMBODIMENTS OF THE INVENTION

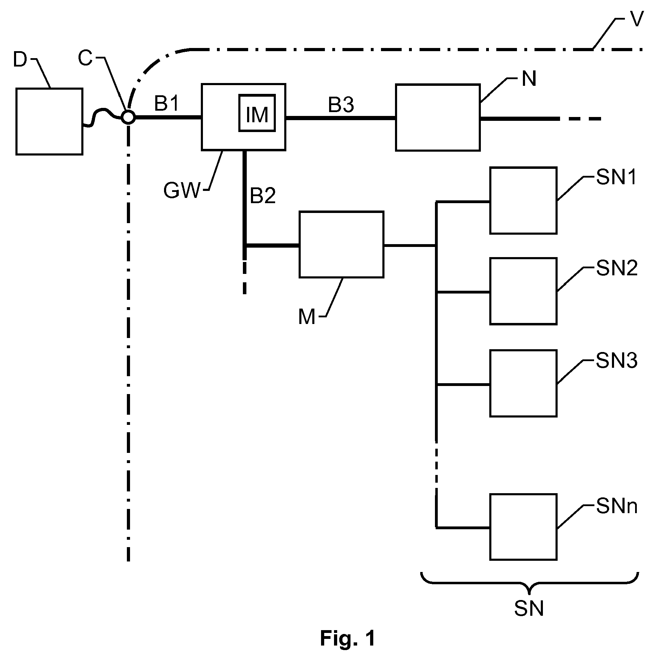

We refer initially to Figure 1, which is a schematic diagram of a communication system according to an embodiment of the invention. The communication system is integrated in a motor vehicle V and comprises a network gateway node GW, a superordinate node M and a set of subordinate nodes SN.

A first bus B1 connects the network gateway node GW communicatively to a connection module C which is configured to be connected to a diagnosis client D. The diagnosis client D is preferably arranged externally relative to the vehicle V but may technically equally well be part of the vehicle. A second bus B2 connects the superordinate node M communicatively to the network gateway node GW. The network gateway node GW may of course also be communicatively connected to at least a third bus B3 via which a further node N (e.g. another superordinate node) communicates with the network gateway node GW. In any case, the network gateway node GW is configured to communicate with the diagnosis client D via the first bus B1. The superordinate node M is configured to communicate with the network gateway node GW via the second bus B2. The nodes SN1, SN2, SN3, ..., SNn included in said set of subordinate nodes SN are configured to communicate with the superordinate node M. The superordinate node M thus serves as an interface for the subordinate nodes SN1, SN2, SN3, ..., SNn relative to the second bus B2.

In an operating state for normal running of the vehicle V the superordinate node M is configured to provide on the second bus B2 any fault codes arising from the subordinate nodes SN1, SN2, SN3, ..., SNn via a shared network address, preferably the address which identifies the superordinate node M on the second bus B2. The subordinate nodes SN1, SN2, SN2, ..., SNn thus appear as a single node on the second bus B2, which may be advantageous during normal running, since it simplifies the handling of the subordinate nodes SN1, SN2, SN2, ..., SNn in the communication system.

In a programming state the network gateway node GW is configured to allow the diagnosis client D to have access to the subordinate nodes SN1, SN2, SN2, ..., SNn. This access is thus provided via the connection mode C, the first bus B1, the network gateway node GW, the second bus B2 and the superordinate node M. Via said access the diagnosis client D may for example review which specific nodes SN1, SN2, SN3, ..., SNn are subordinate to the superordinate node M. The diagnosis client D may thus also install and/or in some other way manipulate software in one or more of the subordinate nodes SN1, SN2, SN2, ..., SNn, e.g. it may effect updating of at least one software in at least one node. After such installation or other manipulation, the superordinate node M is with advantage returned to the normal operating state.

In one embodiment of the invention each of the subordinate nodes SN1, SN2, SN2, ..., SNn is associated, in the operating state, with an address which is unique among the subordinate nodes (i.e. within the domain administered by the superordinate node M). The unique address for a subordinate node is here determined with advantage by the respective node's physical location in the communicative connection to the superordinate node M.

In one embodiment of the invention the network gateway node GW in the programming state is further configured to investigate whether two or more of the subordinate nodes SN1, SN2, SN2, ..., SNn have not yet been programme with a function-specific software and are therefore associated with the same address of the second bus B2. Should such investigation show that at least two of the subordinate nodes SN1, SN2, SN2, ..., SNn have overlapping addresses (i.e. are using the same address) on the second bus B2, the network gateway node GW is configured to employ a procedure for random-number-based addressing when said software updating is effected in said at least two subordinate nodes.

Specifically the procedure for random-number-based addressing may comprise the following steps:
(a) choosing one of the at least two nodes which are associated with the same address on the second bus B2,
(b) allocating the chosen node a temporary address which is unique and determined on the basis of a random number,
(c) downloading via the superordinate node M a software in the chosen node by using the temporary address. After this download, the chosen node is associated with a permanent address which is determined by a physical location of the subordinate node in the communicative connection to the superordinate node M and which is unique (at least within the domain of subordinate nodes administered by the superordinate node),
(d) choosing one of any remaining nodes out of said at least two subordinate nodes originally associated with the same address on the second bus B2 and not yet allocated a permanent address according to step (c), and
(e) repeating steps (b) to (d) until software has been downloaded in all of the at least two subordinate nodes which were associated with the same address on the second bus B2.

The network gateway node GW comprises with advantage a processor/computer which is caused to function as above by means of a computer programme stored in a memory unit IM. The memory unit IM may be part of, or communicatively connected to, said processor/said computer. Said computer programme may also be distributed so that the whole or parts of it is/are stored in the superordinate node M. In cases where the communication system comprises two or more superordinate nodes, e.g. the node N in Figure 1, the whole or parts of said computer programme may also be stored in one or more of these superordinate nodes.

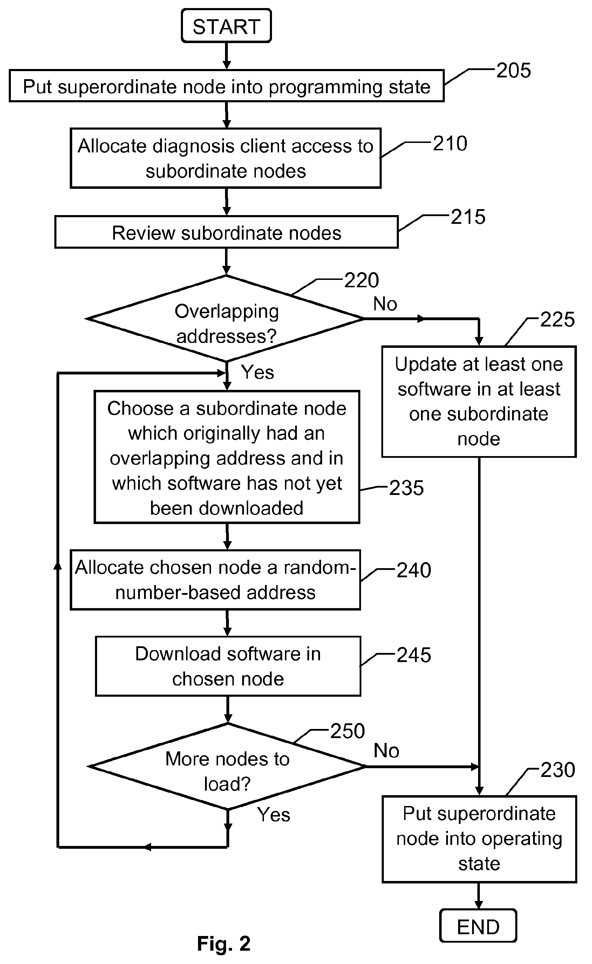

To summarise, a preferred embodiment of the proposed method for programming a communication system will now be described with reference to the flowchart in Figure 2. The method supposes that the communication system is on board a motor vehicle and comprises a network gateway node configured to communicate with a diagnosis client via a first bus, a superordinate node configured to communicate with the network gateway node via a second bus, and a set of subordinate nodes including at least one node which is communicatively connected to the superordinate node. The superordinate node serves here as an interface for said set of subordinate nodes relative to the second bus. In an operating state for normal running of the motor vehicle the superordinate node is configured to provide on the second bus any fault codes arising from said set of subordinate nodes via a shared network address.

As a first step 205 the superordinate node is put into a programming state. As a step 210 the diagnosis client is then allocated access to the subordinate nodes which are part of the set of subnodes communicatively connected to the superordinate node. The diagnosis client may thus communicate with the subordinate nodes via the first and second buses, the network gateway node and the superordinate node.

A next step 215 reviews which specific nodes are part of the respective set of subordinate nodes. This review takes place via the diagnosis client.

This is followed by a step 220 of investigating whether there are any overlapping addresses among the subordinate nodes. If such is the case, a step 235 follows, otherwise the procedure goes on to a step 225.

At step 225 there is updating of at least one software in at least one specific subnode, i.e. software is installed in the one or more subnodes in which software updating is to be effected. The software updating takes place via the diagnosis client. This is followed by a step 230 in which the superordinate node is put into the operating state, i.e. is returned from the change of state at step 205, whereupon the procedure ends.

At step 235 any one of the subordinate nodes which at step 220 were found to have overlapping addresses is chosen. The chosen node is then allocated as a following step 240 a random-number-based address (which is supposed to differ from the chosen node's original address). On the basis of the random-number-based address, software is downloaded in the chosen node as a next step 245. This download takes place via the diagnosis client. This is followed by a step 250 of investigating whether software is to be downloaded in further nodes (i.e. more of the nodes which at step 220 were found to have overlapping addresses). If such is the case, the procedure loops back to step 220 to choose another subordinate node whose original address overlapped with that of another node, otherwise the procedure goes on to step 230.

The method steps described with reference to Figure 2 may be directed by means of a programmed computer facility. In addition, although the embodiments of the invention described above with reference to the drawings comprise a computer and processes conducted in a computer, the invention extends to computer programmes, particularly computer programmes on or in a support suited to practical implementation of the invention. The programme may be in the form of source code, object code, a code which is intermediate between source and object code, e.g. in partly compiled form, or in any other form suitable for use in implementing the process according to the invention. The support may be any entity or device capable of carrying the programme. It may for example comprise a storage medium such as a flash memory, a ROM (read only memory), e.g. a CD (compact disc) or a semiconductor ROM, EPROM (electrically programmable ROM), EEPROM (erasable EPROM), or a magnetic recording medium, e.g. a floppy disc or hard disc. It may also be a transmitting support such as an electrical or optical signal which can be conveyed by an electrical or optical cable or via radio or in some other way. Where the programme takes the form of a signal which can be conveyed directly by a cable or other device or means, the support may take the form of such a cable, device or means. It may alternatively be an integrated circuit in which the programme is embedded, in which case the integrated circuit is suited to conducting, or being used in the conducting of, the respective processes.

The invention is not restricted to the embodiments described with reference to the drawings but may be varied freely within the scope of the claims set out below.

## Claims

1. A communication system in a motor vehicle (V), which system comprises
a network gateway node (GW) configured to communicate with a diagnosis client (D) via a first bus (B1),
a superordinate node (M) configured to communicate with the network gateway node (GW) via a second bus (B2), and
a set of subordinate nodes (SN) including at least one node (SN1, ..., SNn) each communicatively connected to the superordinate node (M),
**characterised in that** the superordinate node (M) serves as an interface for said set of subordinate nodes (SN) relative to the second bus (B2), that the superordinate node (M) in an operating state for normal running of the motor vehicle (V) is configured to provide on the second bus (B2) any fault codes arising from said set of subordinate nodes (SN) via a shared network address, and that the network gateway node (GW) in a programming state is configured
to allow the diagnosis client (D) to have access to the nodes (SN1, ..., SNn) included in said set of subordinate nodes (SN) via the first and second buses (B1; B2), the network gateway node (GW) and the superordinate node (M), thus enabling the diagnosis client (D) (i) to review which specific nodes (SN1, ..., SNn) are part of said set of subordinate nodes (SN) and (ii) to effect updating of at least one software in at least one specific node in said set of subordinate nodes (SN), and, after completion of updating,
to allow the superordinate node (M) to return to the operating state.

2. The system according to claim 1, in which the communication system comprises a connection module (C) connected to the first bus (B1) and configured to be connected to a diagnosis client (D) which is external relative to the motor vehicle (V).

3. The system according to either of claims 1 and 2, in which the shared network address identifies the superordinate node (M) on the second bus (B2).

4. The system according to any one of the foregoing claims, in which each of the nodes (SN1, ..., SNn) included in said set of subordinate nodes (SN) is associated, in the operating state, with an address which is unique within said set of subordinate nodes (SN) and which is determined by a physical location of the node in the communicative connection to the superordinate node (M).

5. The system according to any one of the foregoing claims, in which the network gateway node (GW) in the programming state is further configured
to investigate whether two or more of the nodes (SN1, ..., SNn) in said set of subordinate nodes (SN) have not yet been programmed with a function-specific software and are therefore associated with the same address on the second bus (B2) and,
if two or more of the nodes (SN1, ..., SNn) in said set of subordinate nodes (SN) prove to be associated with the same address on the second bus (B2), to employ a procedure for random-number-based addressing during said effecting of software updating in said two or more of nodes (SN1, ..., SNn).

6. The system according to claim 5, in which said procedure for random-number-based addressing comprises the steps of
(a) choosing one of said two or more nodes (SN1, ..., SNn) which are associated with the same address on the second bus B2,
(b) allocating the chosen node a temporary address which is unique and is determined on the basis of a random number,
(c) downloading via the superordinate node (M) a software in the chosen node by using the temporary address, after which the chosen node becomes associated with a permanent address which is determined by a physical location of the node in the communicative connection to the superordinate node (M),
(d) choosing one of any remaining nodes out of said two or more nodes (SN1, ..., SNn) which were originally associated with the same address on the second bus (B2), and
(e) repeating steps (b) to (d) until software has been downloaded in all of the two or more nodes (SN1, ..., SNn) which were originally associated with the same address on the second bus (B2).

7. The system according to any of claims 1 - 6, wherein the system comprises a second superordinate node (N) configured to communicate with the network gateway node (GW) via a third bus (B3).

8. A method for programming of a communication system in a motor vehicle (V), which system comprises a network gateway node (GW) configured to communicate with a diagnosis client (D) via a first bus (B1), a superordinate node (M) configured to communicate with the network gateway node (GW) via a second bus (B2), and a set of subordinate nodes (SN) including at least one node (SN1, ..., SNn) respectively communicatively connected to the superordinate node (M),
**characterised in that** the superordinate mode (M) serves as an interface for said set of subordinate nodes (SN) relative to the second bus (B2), that the superordinate node (M) in an operating state for normal running of the motor vehicle (V) is configured to provide on the second bus (B2) any fault codes arising from said set of subordinate nodes (SN) via a shared network address, which method comprises
putting the network gateway node (GW) into a programming state,
allocating the diagnosis client (D) access to the nodes (SN1, ..., SNn) included in said set of subordinate nodes (SN), via the first and second buses (B1; B2), the network gateway node (GW) and the superordinate node (M),
reviewing via the diagnosis client (D) which specific nodes (SN1, ..., SNn) are part of said set of subordinate nodes (SN),
effecting updating via the diagnosis client (D) of at least one software in at least one specific node in said set of subordinate nodes (SN) and, after completion of updating,
returning the superordinate node (M) to the operating state.

9. The method according to claim 8, in which the shared network address identifies the superordinate node (M) on the second bus (B2).

10. The method according either of claims 8 and 9, in which each of the nodes (SN1, ..., SNn) included in said set of subordinate nodes (SN) is associated, in the operating state, with an address which is unique within said set of subordinate nodes (SN) and which is determined by a physical location of the node in the communicative connection to the superordinate node (M).

11. The method according to any one of claims 8 to 10, further comprising
investigating via the network gateway node (GW) whether two or more of the nodes (SN1, ..., SNn) in said set of subordinate nodes (SN) have not yet been programme with a function-specific software and are therefore associated with the same address on the second bus (B2) and, if two or more of the nodes (SN, ..., SNn) in said set of subordinate nodes (SN) prove to be associated with the same address on the second bus (B2),
employing via the network gateway node (GW) a procedure for random-number-based addressing during said effecting of software updating in said two or more of nodes (SN1, ..., SNn).

12. The method according to claim 11, in which said procedure for random-number-based addressing comprises the steps of
(a) choosing one of said two or more nodes (SN1, ..., SNn) which are associated with the same address on the second bus B2,
(b) allocating the chosen node a temporary address which is unique and is determined on the basis of a random number,
(c) downloading via the superordinate node (M) a software in the chosen node by using the temporary address, after which the chosen node becomes associated with a permanent address which is determined by a physical location of the node in the communicative connection to the superordinate node (M),
(d) choosing one of any remaining nodes out of said said two or more nodes (SN1, ..., SNn) which were originally associated with the same address on the second bus (B2), and
(e) repeating steps (b) to (d) until software has been downloaded in all of the two or more nodes (SN1, ..., SNn) which were originally associated with the same address on the second bus (B2).

13. The method according to any one of claims 8 - 12, wherein the system comprises a second superordinate node (N) configured to communicate with the network gateway node (GW) via a third bus (B3).

14. A computer programme, comprising software adapted to, when run on a computer, perform the steps according to any one of claims 8 to 13.

15. A computer-readable medium (IM) which has stored on it a computer programme adapted to, when run on a computer, perform the steps according to any one of claims 8 to 13.

## Patentansprüche

1. Kommunikationssystem in einem Kraftfahrzeug (V), das System umfassend
einen Netzwerktorknoten (GW), der konfiguriert ist, mit einem Diagnoseklienten (D) über einen ersten Bus (B1) zu kommunizieren,
einen übergeordneten Knoten (M), der konfiguriert ist, mit dem Netzwerktorknoten (GW) über einen zweiten Bus (B2) zu kommunizieren, und
eine Menge von untergeordneten Knoten (SN) umfassend mindestens einen Knoten (SN1,..., SNn), wobei jeder Knoten mit dem übergeordneten Knoten (M) kommunikativ verbunden ist,
**dadurch gekennzeichnet, dass** der übergeordnete Knoten (M) als eine Schnittstelle für die Menge von untergeordneten Knoten (SN) relativ zu dem zweiten Bus (B2) dient, wobei der übergeordnete Knoten (M) in einem Betriebszustand für den normalen Betrieb des Kraftfahrzeugs (V) konfiguriert ist, auf dem zweiten Bus (B2) von der Menge von untergeordneten Knoten (SN), über eine geteilte Netzwerkadresse, auftretende Fehlercodes bereitzustellen, und wobei der Netzwerktorknoten (GW) in einem Programmierzustand konfiguriert ist,
dem Diagnoseklienten (D) zu erlauben, Zugriff auf die Knoten (SN1,..., SNn) zu haben, die in der Menge von untergeordneten Knoten (SN) enthalten sind, über den ersten und zweiten Bus (B1; B2), den Netzwerktorknoten (GW) und den übergeordneten Knoten (M), wodurch der Diagnoseklient (D) befähigt wird, (i) zu überprüfen welche spezifischen Knoten (SN1,..., SNn) Teil der Menge der untergeordneten Knoten (SN) sind, und (ii) ein Aktualisieren von mindestens einer Software in mindestens einem spezifischen Knoten in der Menge von untergeordneten Knoten (SN) zu bewirken, und, nach Vollendung des Aktualisierens,
dem übergeordneten Knoten (M) zu erlauben, in den Betriebszustand zurückzukehren.

2. System nach Anspruch 1, wobei das Kommunikationssystem ein Verbindungsmodul (C) umfasst, das mit dem ersten Bus (B1) verbunden ist und konfiguriert ist, mit einem Diagnoseklienten (D) verbunden zu sein, welcher außerhalb von dem Kraftfahrzeug (V) ist.

3. System nach Anspruch 1 oder 2, in welchem die geteilte Netzwerkadresse den übergeordneten Knoten (M) auf dem zweiten Bus (B2) identifiziert.

4. System nach einem der vorangegangenen Ansprüche, in welchem jeder der in der Menge von untergeordneten Knoten (SN) enthaltenen Knoten (SN1,..., SNn), in dem Betriebszustand, mit einer Adresse verknüpft ist, welche innerhalb der Menge von untergeordneten Knoten (SN) einzigartig ist und welche durch eine physikalische Position des Knotens in der kommunikativen Verbindung mit dem übergeordneten Knoten (M) bestimmt wird.

5. System nach einem der vorangegangenen Ansprüche, in welchem der Netzwerktorknoten (GW), in dem Programmierzustand, ferner konfiguriert ist,
zu untersuchen, ob zwei oder mehrere der Knoten (SN1,..., SNn) in der Menge von untergeordneten Knoten (SN) noch nicht mit einer funktionsspezifischen Software programmiert wurden und deshalb mit derselben Adresse auf dem zweiten Bus (B2) verknüpft sind, und
wenn sich zwei oder mehrere der Knoten (SN1,..., SNn) in der Menge von untergeordneten Knoten (SN) als mit derselben Adresse auf dem zweiten Bus (B2) verknüpft zu sein erweisen, ein Verfahren zur Zufallszahlbasierten Adressierung während dem Bewirken der Softwareaktualisierung in den zwei oder mehreren Knoten (SN1,.., SNn) zu verwenden.

6. System nach Anspruch 5, in welchem das Verfahren zur Zufallszahlbasierten Adressierung die Schritte umfasst
(a) Auswählen eines der zwei oder mehreren Knoten (SN1,..., SNn), welche mit derselben Adresse auf dem zweiten Bus (B2) verknüpft sind,
(b) dem ausgewählten Knoten eine temporäre Adresse zuordnen, welche einzigartig ist und auf Basis einer Zufallszahl bestimmt wird,
(c) Herunterladen, über den übergeordneten Knoten (M), einer Software in dem ausgewählten Knoten, durch Verwenden der temporären Adresse, nach welcher der ausgewählte Knoten mit einer permanenten Adresse verknüpft wird, welche durch eine physikalische Position des Knotens in der kommunikativen Verbindung mit dem übergeordneten Knoten (M) bestimmt wird,
(d) Auswählen eines eines übrigen Knotens aus den zwei oder mehreren Knotenklammer auf SN1,..., SNn), welche ursprünglich mit derselben Adresse auf dem zweiten Bus (B2) verknüpft waren, und
(e) Wiederholen der Schritte (b) bis (d) bis die Software heruntergeladen wurde, in allen der zwei oder mehreren Knoten (SN1,..., SNn), welche ursprünglich mit derselben Adresse auf dem zweiten Bus (B2) verknüpft waren.

7. System nach einem der Ansprüche 1-6, wobei das System einen zweiten übergeordneten Knoten (N) umfasst, der konfiguriert ist, mit dem Netzwerktorknoten (GW) über einen dritten Bus (B3) zu kommunizieren.

8. Verfahren zur Programmierung eines Kommunikationssystems in einem Kraftfahrzeug (V), das System umfassend einen Netzwerktorknoten (GW), der konfiguriert ist, mit einem Diagnoseklienten (D) über einen ersten Bus (B1) zu kommunizieren, einen übergeordneten Knoten (M), der konfiguriert ist, mit dem Netzwerktorknoten (GW) über einen zweiten Bus (B2) zu kommunizieren, und
eine Menge von untergeordneten Knoten (SN) umfassend mindestens einen Knoten (SN1,..., SNn), wobei jeder Knoten mit dem übergeordneten Knoten (M) kommunikativ verbunden ist,
**dadurch gekennzeichnet, dass** der übergeordnete Knoten (M) als eine Schnittstelle für die Menge von untergeordneten Knoten (SN) relativ zu dem zweiten Bus (B2) dient, wobei der übergeordnete Knoten (M) in einem Betriebszustand für den normalen Betrieb des Kraftfahrzeugs (V) konfiguriert ist, auf dem zweiten Bus (B2) von der Menge von untergeordneten Knoten (SN), über eine geteilte Netzwerkadresse, auftretende Fehlercodes bereitzustellen, und wobei das Verfahren umfasst
Versetzen des Netzwerktorknotens (GW) in einen Programmierzustand,
Zugriff zuordnen, dem Diagnoseklienten (D), auf die Knoten (SN1,..., SNn), die in der Menge von untergeordneten Knoten (SN) enthalten sind, über den ersten und zweiten Bus (B1; B2), den Netzwerktorknoten (GW) und den übergeordneten Knoten (M),
Überprüfen über den Diagnoseklienten (D), welche spezifischen Knoten (SN1,..., SNn) Teil der Menge der untergeordneten Knoten (SN) sind,
Bewirken einer Aktualisierung mindestens einer Software in mindestens einem spezifischen Knoten in der Menge von untergeordneten Knoten (SN), und, nach Vollendung der Aktualisierung,
Zurückkehren des übergeordneten Knotens (M) in den Betriebszustand.

9. Verfahren nach Anspruch 8, in welchem die geteilte Netzwerkadresse den übergeordneten Knoten (M) auf dem zweiten Bus (B2) identifiziert.

10. Verfahren nach Anspruch 8 oder 9, in welchem jeder der in der Menge von untergeordneten Knoten (SN) enthaltenen Knoten (SN1,..., SNn), in dem Betriebszustand, mit einer Adresse verknüpft ist, welche innerhalb der Menge von untergeordneten Knoten (SN) einzigartig ist und welche durch eine physikalische Position des Knotens in der kommunikativen Verbindung mit dem übergeordneten Knoten (M) bestimmt wird.

11. Verfahren nach einem der Ansprüche 8 bis 10, ferner umfassend
Untersuchen, über den Netzwerktorknoten (GW), ob zwei oder mehrere der Knoten (SN1,..., SNn) in der Menge von untergeordneten Knoten (SN) noch nicht mit einer funktionsspezifischen Software programmiert wurden und deshalb mit derselben Adresse auf dem zweiten Bus (B2) verknüpft sind, und wenn sich zwei oder mehrere der Knoten (SN1,..., SNn) in der Menge von untergeordneten Knoten (SN) als mit derselben Adresse auf dem zweiten Bus (B2) verknüpft zu sein erweisen,
Verwenden, über den Netzwerktorknoten (GW), eines Verfahrens zur Zufallszahlbasierten Adressierung während dem Bewirken der Softwareaktualisierung in den zwei oder mehreren Knoten (SN1,..., SNn).

12. Verfahren nach Anspruch 11, in welchem das Verfahren zur Zufallszahlbasierten Adressierung die Schritte umfasst
(a) Auswählen eines der zwei oder mehreren Knoten (SN1,..., SNn), welche mit derselben Adresse auf dem zweiten Bus (B2) verknüpft sind,
(b) dem ausgewählten Knoten eine temporäre Adresse zuordnen, welche einzigartig ist und auf Basis einer Zufallszahl bestimmt wird,
(c) Herunterladen, über den übergeordneten Knoten (M), einer Software in dem ausgewählten Knoten, durch Verwenden der temporären Adresse, nach welcher der ausgewählte Knoten mit einer permanenten Adresse verknüpft wird, welche durch eine physikalische Position des Knotens in der kommunikativen Verbindung mit dem übergeordneten Knoten (M) bestimmt wird,
(d) Auswählen eines eines übrigen Knotens aus den zwei oder mehreren Knotenklammer auf SN1,..., SNn), welche ursprünglich mit derselben Adresse auf dem zweiten Bus (B2) verknüpft waren, und
(e) Wiederholen der Schritte (b) bis (d), bis die Software heruntergeladen wurde, in allen der zwei oder mehreren Knoten (SN1,..., SNn), welche ursprünglich mit derselben Adresse auf dem zweiten Bus (B2) verknüpft waren.

13. Verfahren nach einem der Ansprüche 8-12, wobei das System einen zweiten übergeordneten Knoten (N) umfasst, der konfiguriert ist, mit dem Netzwerktorknoten (GW) über einen dritten Bus (B3) zu kommunizieren.

14. Computerprogramm, umfassend Software, die ausgebildet ist, wenn sie auf einem Computer läuft, die Schritte nach einem der Ansprüche 8 bis 13 auszuführen.

15. Computer-lesbares Medium (IM), welches ein Computerprogramm auf sich gespeichert hat, das ausgebildet ist, wenn es auf einem Computer läuft, die Schritte nach einem der Ansprüche 8 bis 13 auszuführen.

## Revendications

1. Système de communication dans un véhicule à moteur (V), lequel système comprend
un noeud passerelle de réseau (GW) configuré pour communiquer avec un client de diagnostic (D) via un premier bus (B1),
un noeud maître (M) configuré pour communiquer avec le noeud passerelle de réseau (GW) via un deuxième bus (B2), et
un ensemble de noeuds subordonnés (SN) incluant au moins un noeud (SN1, ..., SNn), connectés chacun en connexion de communication avec le noeud maître (M),
**caractérisé en ce que** le noeud maître (M) sert d'interface pour ledit ensemble de noeuds subordonnés (SN) par rapport au deuxième bus (B2), **en ce que** le noeud maître (M), dans un état de fonctionnement pour une marche normale du véhicule à moteur (V), est configuré pour mettre à disposition sur le deuxième bus (B2) tout code de défaillance provenant dudit ensemble de noeuds subordonnés (SN) via une adresse réseau partagée, et **en ce que** le noeud passerelle de réseau (GW), dans un état de programmation, est configuré pour
permettre au client de diagnostic (D) d'avoir accès aux noeuds (SN1, ..., SNn) inclus dans ledit ensemble de noeuds subordonnés (SN) via les premier et deuxième bus (B1; B2), le noeud passerelle de réseau (GW) et le noeud maître (M), ce qui permet au client de diagnostic (D) (i) de passer en revue quels noeuds (SN1, ..., SNn) spécifiques font partie dudit ensemble de noeuds subordonnés (SN) et (ii) d'exécuter une mise à jour d'au moins un logiciel dans au moins un noeud spécifique dudit ensemble de noeuds subordonnés (SN) et, après achèvement de la mise à jour,
permettre au noeud maître (M) de revenir à l'état de fonctionnement.

2. Système selon la revendication 1, dans lequel le système de communication comprend un module de connexion (C) connecté au premier bus (B1) et configuré pour être connecté à un client de diagnostic (D) qui est externe au véhicule à moteur (V).

3. Système selon l'une ou l'autre des revendications 1 et 2, dans lequel l'adresse réseau partagée identifie le noeud maître (M) sur le deuxième bus (B2).

4. Système selon l'une quelconque des revendications précédentes, dans lequel chacun des noeuds (SN1, ..., SNn) inclus dans ledit ensemble de noeuds subordonnés (SN) est associé, dans l'état de fonctionnement, à une adresse qui est unique dans ledit ensemble de noeuds subordonnés (SN) et qui est déterminée par une localisation physique du noeud sur la connexion de communication avec le noeud maître (M).

5. Système selon l'une quelconque des revendications précédentes, dans lequel le noeud passerelle de réseau (GW), à l'état de programmation, est en outre configuré pour
rechercher si deux ou plus des noeuds (SN1, ..., SNn) dudit ensemble de noeuds subordonnés (SN) n'ont pas encore été programmés avec un logiciel à fonction spécifique et sont donc associés à la même adresse sur le deuxième bus (B2) et
si deux ou plus des noeuds (SN1, ..., SNn) dudit ensemble de noeuds subordonnés (SN) s'avèrent être associés à la même adresse sur le deuxième bus (B2), utiliser une procédure d'adressage par nombre aléatoire pendant ladite exécution de la mise à jour logicielle dans lesdits deux noeuds (SN1, ..., SNn) ou plus.

6. Système selon la revendication 5, dans lequel ladite procédure d'adressage par nombre aléatoire comprend les étapes suivantes :
(a) choix de l'un desdits deux noeuds (SN1, ..., SNn) ou plus qui sont associés à la même adresse sur le deuxième bus B2,
(b) allocation au noeud choisi d'une adresse temporaire qui est unique et qui est déterminée sur la base d'un nombre aléatoire,
(c) téléchargement, par le noeud maître (M), d'un logiciel dans le noeud choisi à l'aide de l'adresse temporaire, après quoi le noeud choisi devient associé à une adresse permanente qui est déterminée par une localisation physique du noeud sur la connexion de communication avec le noeud maître (M),
(d) choix de l'un des quelconques noeuds restants parmi lesdits deux noeuds (SN1, ..., SNn) ou plus qui étaient originellement associés à la même adresse sur le deuxième bus (B2), et
(e) répétition des étapes (b) à (d) jusqu'à ce qu'un logiciel ait été téléchargé dans la totalité des deux noeuds (SN1, ..., SNn) ou plus qui étaient originellement associés à la même adresse sur le deuxième bus (B2).

7. Système selon l'une quelconque des revendications 1 à 6, dans lequel le système comprend un deuxième noeud maître (N) configuré pour communiquer avec le noeud passerelle de réseau (GW) via un troisième bus (B3).

8. Procédé de programmation d'un système de communication dans un véhicule à moteur (V), lequel système comprend un noeud passerelle de réseau (GW) configuré pour communiquer avec un client de diagnostic (D) via un premier bus (B1), un noeud maître (M) configuré pour communiquer avec le noeud passerelle de réseau (GW) via un deuxième bus (B2), et un ensemble de noeuds subordonnés (SN) incluant au moins un noeud (SN1, ..., SNn), respectivement connectés en connexion de communication avec le noeud maître (M),
**caractérisé en ce que** le noeud maître (M) sert d'interface pour ledit ensemble de noeuds subordonnés (SN) par rapport au deuxième bus (B2), **en ce que** le noeud maître (M), dans un état de fonctionnement pour une marche normale du véhicule à moteur (V), est configuré pour fournir sur le deuxième bus (B2) tout code de défaillance provenant dudit ensemble de noeuds subordonnés (SN) via une adresse réseau partagée, le procédé comprenant :
un placement du noeud passerelle de réseau (GW) dans un état de programmation,
une allocation au client de diagnostic (D) d'un accès aux noeuds (SN1, ..., SNn) inclus dans ledit ensemble de noeuds subordonnés (SN) via les premier et deuxième bus (B1; B2), le noeud passerelle de réseau (GW) et le noeud maître (M),
un passage en revue, par le client de diagnostic (D), de quels noeuds (SN1, ..., SNn) spécifiques font partie dudit ensemble de noeuds subordonnés (SN),
l'exécution d'une mise à jour, par le client de diagnostic (D), d'au moins un logiciel dans au moins un noeud spécifique dudit ensemble de noeuds subordonnés (SN), et après achèvement de la mise à jour,
le retour du noeud maître (M) à l'état de fonctionnement.

9. Procédé selon la revendication 8, dans lequel l'adresse réseau partagée identifie le noeud maître (M) sur le deuxième bus (B2).

10. Procédé selon l'une ou l'autre des revendications 8 et 9, dans lequel chacun des noeuds (SN1, ..., SNn) inclus dans ledit ensemble de noeuds subordonnés (SN) est associé, dans l'état de fonctionnement, à une adresse qui est unique dans ledit ensemble de noeuds subordonnés (SN) et qui est déterminée par une localisation physique du noeud sur la connexion de communication avec le noeud maître (M).

11. Procédé selon l'une quelconque des revendications 8 à 10, comprenant en outre :
une recherche, via le noeud passerelle de réseau (GW), si deux ou plus des noeuds (SN1, ..., SNn) dudit ensemble de noeuds subordonnés (SN) n'ont pas encore été programmés avec un logiciel à fonction spécifique et sont donc associés à la même adresse sur le deuxième bus (B2) et, si deux ou plus des noeuds (SN1, ..., SNn) dudit ensemble de noeuds subordonnés (SN) s'avèrent être associés à la même adresse sur le deuxième bus (B2),
une utilisation, via le noeud passerelle de réseau (GW), d'une procédure d'adressage par nombre aléatoire pendant ladite exécution de la mise à jour logicielle dans lesdits deux noeuds (SN1, ..., SNn) ou plus.

12. Procédé selon la revendication 11, dans lequel ladite procédure d'adressage par nombre aléatoire comprend les étapes les étapes suivantes :
(a) choix de l'un desdits deux noeuds (SN1, ..., SNn) ou plus qui sont associés à la même adresse sur le deuxième bus B2,
(b) allocation au noeud choisi d'une adresse temporaire qui est unique et qui est déterminée sur la base d'un nombre aléatoire,
(c) téléchargement, par le noeud maître (M), d'un logiciel dans le noeud choisi à l'aide de l'adresse temporaire, après quoi le noeud choisi devient associé à une adresse permanente qui est déterminée par une localisation physique du noeud sur la connexion de communication avec le noeud maître (M),
(d) choix de l'un quelconques des noeuds restants parmi lesdits deux noeuds (SN1, ..., SNn) ou plus qui étaient originellement associés à la même adresse sur le deuxième bus (B2), et
(e) répétition des étapes (b) à (d) jusqu'à ce qu'un logiciel ait été téléchargé dans la totalité des deux noeuds (SN1, ..., SNn) ou plus qui étaient originellement associés à la même adresse sur le deuxième bus (B2).

13. Procédé selon l'une quelconque des revendications 8 à 12, dans lequel le système comprend un deuxième noeud maître (N) configuré pour communiquer avec le noeud passerelle de réseau (GW) via un troisième bus (B3).

14. Programme informatique, comprenant un logiciel adapté pour, lorsqu'il est exécuté sur un ordinateur, exécuter les étapes selon l'une quelconque des revendications 8 à 13.

15. Support lisible par ordinateur (IM) dans lequel est stocké un programme informatique adapté pour, lorsqu'il est exécuté sur un ordinateur, exécuter les étapes selon l'une quelconque des revendications 8 à 13.
